# EUROPEAN PATENT SPECIFICATION

(11) **EP 2 634 500 B1**
(45) Date of publication and mention of the grant of the patent: **14.01.2015**
(21) Application number: 13153388.7
(22) Date of filing: 31.01.2013
(51) Int. Cl.: F24F 12/00, G01L 7/16, A47L 9/19

(54) **System for controlling the indoor climate in a building**
System zur Steuerung des Innenklimas in einem Gebäude
Système de contrôle de la température interne dans un bâtiment

(30) Priority: 31.01.2012 SE 1250068
(43) Date of publication of application: 04.09.2013
(73) Proprietor: Swegon AB, 535 23 Kvänum (SE)
(72) Inventor: Mellbin, Martin, 671 31 Arvika (SE); Fjaestad, Adam, 671 92 Arvika (SE); Fransson, Anders, 671 92 Arvika (SE)
(74) Representative: Bergquist, Kjell Gunnar

(56) References cited:
- EP-B1- 0 706 630
- WO-A1-2009/000974

## Description

### TECHNICAL FIELD

The present invention relates to a system for controlling the indoor climate in a building.

### BACKGROUND OF THE INVENTION

In offices and other larger premises, there is often a need to be able to control the indoor climate separately in different parts of the premises or in individual rooms. An accurate local temperature and ventilation control is required to ensure a sufficient comfort level for the persons present in a building. Also heat generated by electric appliances and heat and exhaled air generated by persons inside the building have to be taken into account for the control. Together with the prevailing weather conditions and existing local ventilation regulations, these factors have a large influence on the instantaneous demand for heating, cooling and ventilation capacity.

It is difficult to design, dimension and be capable of controlling ventilation or air conditions systems in a sufficiently energy-efficient way, among other things due to the large number of external and internal factors which may influence the instantaneous demand for heating, cooling and ventilation. Various devices and methods seeking to enable an improved control or to facilitate the indoor climate control in buildings have been developed previously.

The document EP0706630 B1, for example, describes a control arrangement for a ventilation or air conditioning apparatus, which is based on minimizing the consumption of energy by measuring the parameters influencing the consumption, such as fluid flows and their temperatures and ratios, and on controlling these parameters in accordance with control algorithms based on enthalpy changes. The control arrangement according to EP0706630 B1 comprises a heat recovery circuit based on heat transfer fluid circulation and that comprises heat exchangers in the supply and exhaust air flows, a supply circuit supplying additional heating or additional cooling energy from an external heating or cooling source and which is connectable to the heat recovery circuit, means for controlling the supply of additional energy, first measuring means for measuring the temperatures and fluid flows of the heat transfer fluid, and a control unit for controlling the supply of the fluid supplying the additional energy. The described arrangement further comprises second measuring means for measuring a temperature and a fluid flow of the fluid supplying additional energy, wherein the first and second measuring means are connected to the control unit and this controls the means controlling the supply of fluid supplying additional energy on the basis of the measurement results from the first and second measuring means to minimize the additional energy supplied. EP0706630 B1 furthermore describes a method for controlling the heat transfer in a ventilation or an air conditioning apparatus in which heat in the exhaust air is recovered into the supply air by means of a heat transfer circuit based on fluid circulation, wherein additional heating or additional cooling energy from an external heating or cooling source is supplied to the heat transfer circuit when the heat transfer is insufficient for maintaining a desired temperature of the supply air, wherein the supply of additional heating or additional cooling energy is controlled on the basis of temperatures and fluid flows respectively measured in the heat transfer circuit as well as of a temperature and of a fluid flow of fluid supplying additional heating or additional cooling energy to minimize the additional heating or additional cooling energy supplied.

The document SE520856C2 describes a ventilation device for cooling air supplied to a space, such as a room, a building, etc., which device comprises a ventilation unit in the form of a supply part, accommodating at least one fan, at least one evaporator and optional filters. The described device is claimed to be characterized in that an air water heat exchanger is placed before or after the evaporator with respect to the flow direction of the air supplied. SE520856C2 also describes a method for controlling the ventilation device, which is claimed to be characterized in that the supply of water to the parts included in the ventilation device is controlled separately as the need for cooling the supply air increases.

The document WO 2009/000 974 A1 discloses a further HVAC System.

Accordingly, a number of different ventilation or air conditioning systems for offices and other larger premises, as well as devices and methods for controlling such systems, are previously known.

A disadvantage of the previously known ventilation or air conditioning systems is that they can be inadequate to remove and/or recover a sufficient amount of energy for cooling or heating the spaces being ventilated, especially when the system is strongly influenced by prevailing ambient conditions, for example the outdoor temperature.

Another disadvantage of the prior art is that it does not provide any clear guidance on how a ventilation or air conditioning system should be designed and dimensioned to enable one and the same basic system to be used for buildings located in different climate zones or which for some other reason have completely different, or strongly fluctuating, heating, cooling and/or ventilation demands. This means that the basic system has to be "over-dimensioned" with unnecessarily large air ducts, air fans, heat exchangers, etc., which results in higher energy consumption, increased material consumption and thereby higher costs than what would actually be necessary.

### SUMMARY OF THE INVENTION

It is therefore a first object of the invention to provide an energy efficient system for controlling the indoor climate in a building, which system has a well-defined basic design providing a sufficiently flexible heating, cooling and ventilation capacity so as to enable one and the same basic system to be used, with maintained high energy efficiency, in different climate zones and in spaces where the system users for various reasons have different heating, cooling and/or ventilation demands, without having to unnecessarily over-dimension air ducts, ventilation fans and other components in the system.

This first object is achieved by means of a system according to claim 1, which at least comprises a first air duct which is adapted for introducing outdoor air into the system and for discharging outdoor air treated in the system as supply air into the interior of the building, a second air duct which is adapted for introducing exhaust air from the interior of the building into the system and for discharging exhaust air treated in the system into the outdoor air outside the interior of the building, an exhaust-supply air heat exchanger which is arranged in connection with said first and second air ducts for selective transfer of heat from said exhaust air being treated in the system to said outdoor air being treated in the system or from said outdoor air being treated in the system to said exhaust air being treated in the system, a water system having a hot water circuit and a cold water circuit, a water-supply air heat exchanger which is arranged in connection with said first air duct for selective connection to said hot water circuit or said cold water circuit for transfer of heat from said hot water circuit to said outdoor air being treated in the system or from said outdoor air being treated in the system to said cold water circuit, a water-exhaust air heat exchanger which is arranged in connection with said second air duct for selective connection to said hot water circuit or said cold water circuit for transfer of heat from said hot water circuit to said exhaust air being treated in the system or from said exhaust air being treated in the system to said cold water circuit, a heat pump which is arranged in connection with said water system for selective transfer of heat between said water circuits, a control unit which is adapted for controlling the flows of air and the flows of fluid in the system, wherein at least one first fan device is arranged in connection with said first and/or second air duct for circulating ventilation air to and/or from the interior of the building, wherein the system has a passage for admitting a partial flow of outdoor air upstream of said water-exhaust air heat exchanger but downstream of said exhaust-supply air heat exchanger, wherein at least one second fan device is arranged in connection with said second air duct for sucking or blowing said partial flow of outdoor air, together with exiting circulated ventilation air, through said water-exhaust air heat exchanger, and wherein said at least one second fan device is dimensioned to be capable of providing a maximum air flow rate which is at least 1,7 times greater than the air flow rate provided by said at least one first fan device when the system is in heating operation.

Thanks to the fact that the system according the invention has a passage for admitting a partial flow of outdoor air upstream of the water-exhaust air heat exchanger and at least one second fan device for sucking or blowing the partial flow together with exiting circulated ventilation air through the water-exhaust air heat exchanger, at the same time as the second fan device provides a maximum air flow rate which is at least 1,7 times greater than the flow rate of exiting ventilation air, it becomes possible to be able to meet the local ventilation and heating requirements existing in a large number of places with a climate similar to the one in a temperate "European" climate zone with one and the same basic system, and this with a very high energy efficiency of the system regardless of in which one of these places the system is installed. If the second fan device is dimensioned to be capable of providing a maximum air flow rate which is at least 2,2 times greater than the flow rate of exiting ventilation air when the system is in cooling operation, it furthermore becomes possible to be able to meet also the cooling requirements existing in the places in question with one and the same basic system and with a very high energy efficiency of the system.

Other objects, advantages and features of the present invention will become apparent from the following description.

### BRIEF DESCRIPTION OF THE DRAWINGS

In the following, a number of embodiments of the invention will be described more closely, only as examples and with reference to the accompanying schematic drawings, in which:
Fig. 1 schematically illustrates the functional principle of a system for controlling the indoor climate in a building according to a preferred embodiment of the invention, wherein the system is shown in an operating mode for heating the supply air with simultaneous heat recovery from the exhaust air; and
Fig. 2 schematically illustrates the system according to the preferred embodiment in an operating mode for cooling the supply air with simultaneous transfer of heat to the exhaust air.

### DESCRIPTION OF EMBODIMENTS OF THE INVENTION

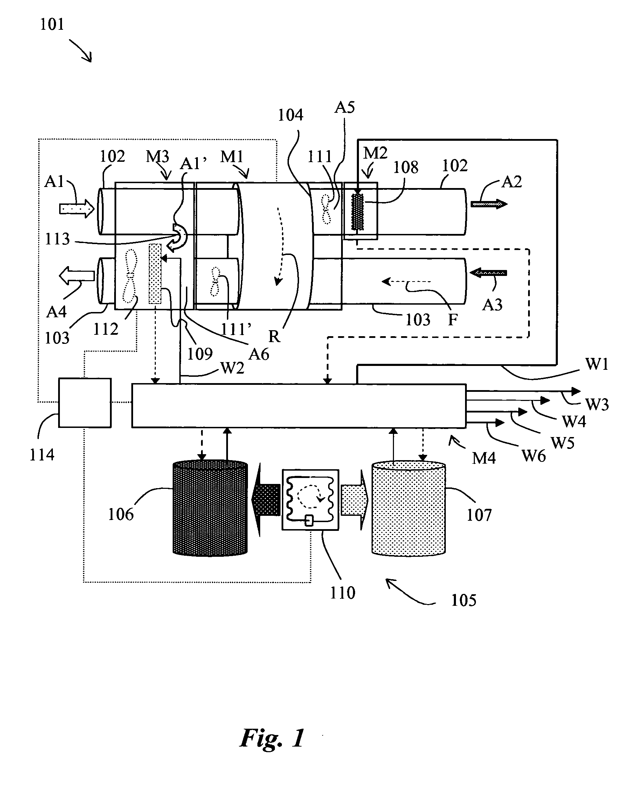

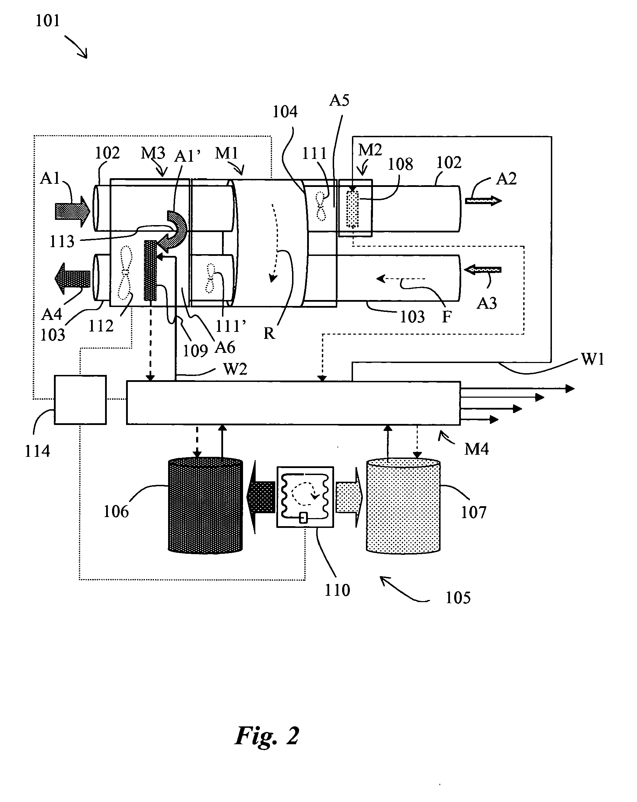

Figure 1 schematically illustrates the functional principle of a system for controlling the indoor climate in a building according to a preferred embodiment of the invention, wherein the system is shown in an operating mode for heating the supply air with simultaneous heat recovery from the exhaust air. Figure 2 shows the system according to the preferred embodiment when it is instead in an operating mode for cooling the supply air with simultaneous transfer of heat to the exhaust air.

The system 101 according to the invention comprises a first air duct 102 which is adapted for introducing outdoor air A1 into the system and for discharging outdoor air A2 treated in the system as supply air into the interior of the building. The system 101 furthermore comprises a second air duct 103 which is adapted for introducing exhaust air A3 from the interior of the building into the system and for discharging exhaust air A4 treated in the system into the outdoor air outside the interior of the building.

The system 101 furthermore comprises an exhaust-supply air heat exchanger 104 which is arranged in connection with said first 102 and second 103 air ducts for selective transfer of heat from said exhaust air A3 being treated in the system to said outdoor air A1 being treated in the system or from said outdoor air A1 being treated in the system to said exhaust air A3 being treated in the system. The exhaust-supply air heat exchanger is particularly advantageously designed as a rotary heat exchanger 104 with a variable speed, but it is conceivable with embodiments of the invention using any suitable type of exhaust-supply air heat exchanger.

The system 101 according to the invention furthermore comprises a water system 105 having a hot water circuit 106 and a cold water circuit 107, a water-supply air heat exchanger 108 which is arranged in connection with said first air duct 102 for selective connection to said hot water circuit 106 or said cold water circuit 107 for transfer of heat from said hot water circuit 106 to said outdoor air A1 being treated in the system or from said outdoor air A1 being treated in the system to said cold water circuit 107, a water-exhaust air heat exchanger 109 which is arranged in connection with said second air duct 103 for selective connection to said hot water circuit 106 or said cold water circuit 107 for transfer of heat from said hot water circuit 106 to said exhaust air A3 being treated in the system or from said exhaust air A3 being treated in the system to said cold water circuit 107, and a heat pump 110 which is arranged in connection with said water system 105 for selective transfer of heat between said water circuits 106, 107.

It is characterizing to the system 101 according to the invention that at least one first fan device 111, 111' is arranged in connection with said first 102 and/or second 103 air duct for circulating ventilation air A2, A3 to and/or from the interior of the building. The first fan device or devices can be any known type of ventilation fans.

It is also characterizing to the invention that the system 101 has a passage 113 for admitting a partial flow A1' of outdoor air A1 upstream of said water-exhaust air heat exchanger 109 but downstream of said exhaust-supply air heat exchanger 104. This partial flow of outdoor air can be used for increasing the amount of air passing through the water-exhaust air heat exchanger, in addition to the air flow of exiting circulated ventilation air determined by the ventilation demand in the interior of the building in question.

Furthermore, it is characterizing to the system 101 according to the invention that at least one second fan device 112 is arranged in connection with said second air duct 103 for sucking or blowing said partial flow A1' of outdoor air A1, together with exiting circulated ventilation air A6, through said water-exhaust air heat exchanger 109, wherein said at least one second fan device 112 is dimensioned to be capable of providing a maximum air flow rate which is at least 1,7 times greater than the air flow rate provided by said at least one first fan device 111, 111' when the system is in heating operation. Such a dimensioning of the fan devices ensures that one and the same basic system can be used for heating operation with very high energy efficiency in a large number of places with a climate similar to the one in a temperate "European" climate zone. The second fan device 112 can be disposed downstream of the water-exhaust air heat exchanger 109 as shown in the figures. In another advantageous embodiment (not shown in the figures) the second fan device is instead disposed inside the second air duct immediately upstream of the water-exhaust air heat exchanger, which ensures that the fan control is not exposed to excessively high temperatures. It is also conceivable with embodiments (not shown) where the second fan device is disposed inside the first air duct in connection with the passage between the first and the second air duct, or is disposed inside the passage itself. It is also conceivable with embodiments (not shown) where a plurality of second fan devices are disposed in different positions relative to the water-exhaust air heat exchanger and together provide the desired air flow rate therethrough.

In a particularly advantageous embodiment of the system 101 according to the invention, said at least one second fan device 112 is dimensioned to be capable of providing a maximum air flow rate which is at least 2,2 times greater than the air flow rate provided by said at least one first fan device 111, 111' when the system is in cooling operation. This embodiment ensures that one and the same basic system can be used also for cooling operation with very high energy efficiency in a large number of places with a climate similar to the one in a temperate "European" climate zone.

In a preferred embodiment of the system 101 according to the invention, the second fan device 112 is provided with a speed control for regulating the admission of the partial flow A1' of outdoor air A1 into the second air duct 103. In another embodiment, in addition to or instead of the speed control, the system comprises a variable shutter (not shown in the figures) which is disposed in the passage 113 for regulating the admission of the partial flow A1' of outdoor air A1 into the second air duct 103.

In the preferred embodiment of the system 101 according to the invention, said water-supply air heat exchanger 108 and/or said water-exhaust air heat exchanger 109 is/are designed as a combined heating and cooling battery for transfer of heat to/from said air A1, A3 from/to said water circuits 106, 107. The heat pump 110 of the system is adapted for either direct or indirect transfer of heat between said water circuits 106, 107.

The system 101 according to the invention furthermore comprises a control unit 114, which is adapted for controlling the flows of air A1, A1', A5, A2, A3, A6, A4 in the system, preferably by means of said fans 111, 111', 112 and/or said variable shutter, and which is adapted for controlling the flows of fluid W1, W2, W3, W4, W5, W6 in the system, preferably by means of a flow control unit M4.

The system 101 according to the invention can advantageously have a modular configuration and comprises at least the following functional modules in such an embodiment:
- a hot water tank 106;
- a cold water tank 107;
- a control unit 114;
- an air handling module M1 comprising said exhaust-supply air heat exchanger 104 and being controlled by said control unit 114;
- an air heating and cooling module M2 comprising said water-supply air heat exchanger 108;
- an energy recovery module M3 comprising said water-exhaust air heat exchanger 109 and being controlled by said control unit 114;
- a fluid flow control module M4 being controlled by said control unit 114;
- a heat pump module comprising said heat pump 110 and being controlled by said control unit 114;
- advantageously, but not necessarily, at least one local comfort module for water carried heating and/or cooling of supplied ventilation air A2,
wherein said hot water tank 106, said cold water tank 107, said air heating and cooling module M2, said energy recovery module M3, and said at least one local comfort module for water carried heating and/or cooling of supplied ventilation air A2 are all designed for connection to said fluid flow control module M4, and wherein each of the majority of said functional modules constitutes a preassembled and pre-tested subsystem provided with quick coupling means for connecting the subsystems into an integrated system 101, which enables control of the indoor climate in said building using at least one control system 114 interacting with and controlling the different subsystems.

The modular configuration and the quick coupling means gives the system according to the invention many advantages, such as easier transport, installation, interconnection and start-up. The system according to this embodiment has a compact configuration and can be installed by a single system installer. The use of single, overall control system minimizes the risk that different subsystems get into conflicts with each other, but embodiments of the invention comprising several separate subsystems interacting with each other, or in which the control system has a distributed topology and comprises a plurality of interconnected processor boards with individual calculation algorithms, are also conceivable. The system's heat pump module can be utilized as an exhaust air heat pump, when there is a demand for ventilation, or as an outdoor air heat pump, when there is no demand for ventilation. Furthermore, it should be noted that the different functional modules can be connected into the system in ways different from what is seen in the figures.

### EXAMPLES EXPLAINING THE INVENTION MORE CLOSELY

### Heating operation

In an average sized building with office spaces located in a temperate "European climate", for example in Stockholm, the maximum heating demand can be estimated to about 31 kW on a cold winter's day. The heat pump 110 (see Fig. 1) included in the system can provide 18 kW, whereas the water-exhaust air heat exchanger 109 has to be capable of recovering and, via the water system 105 and the water-supply air heat exchanger 108, be capable of transferring the remaining 13 kW to the supply air A5 before it is conducted into the building. The temperature change of the air passing through the water-exhaust air heat exchanger 109 should preferably not exceed 4 °C in order to achieve a desirably high efficiency in heating operation. Accordingly, to be capable of recovering the remaining 13 kW needed for the heating of the office spaces, an air flow of at least 13000W/(1,2 kg/m³ * 4 K * 1000 J/kgK) = 2,7 m³/s is required through the water-exhaust air heat exchanger, wherein the factor 1,2 kg/m³ is an approximate value for the density of the air and the factor 1000 J/kgK is an approximate value for the specific heat capacity of the air in this application. This air flow (2,7) through the water-exhaust air heat exchanger 109 is thus sufficient to ensure that the system 101 has a sufficient heating power for a cold winter's day in Stockholm and should therefore also be sufficient if the system is to be used in a place with a warmer winter climate than Stockholm.

Due to different ventilation standards, different densities of employees in the office spaces and other local conditions, the flow requirement for fresh ventilation air A2 into the office spaces in the building may vary depending on where the building is located, for example in Stockholm, Oslo, Stuttgart, Marseille or Lisbon to take a few European examples.

The requirement for fresh ventilation air A2 (ventilation demand) for office buildings located in the above-mentioned places can be estimated as in the following table:

| | Ventilation demand |
|---|---|
| Stockholm | 1,1 m³/s |
| Oslo | 2,2 m³/s |
| Stuttgart | 1,3 m³/s |
| Marseille | 0,7 m³/s |
| Lisbon | 0,6 m³/s |
| *Maximum value* | *2,2* |

Here we see that Oslo places the highest demands on ventilation capacity. However, Oslo has lower winter temperatures than Stockholm and the other places studied. If a similar calculation as for Stockholm is performed for heating operation of a system installed in Oslo, a maximum heating demand of 44 kW can be expected for the corresponding spaces. In that case, the compressor capacity of the heat pump is increased correspondingly to 25,5 kW, which means that water-exhaust air heat exchanger has to be capable of supplying the remaining 18,5 kW. Accordingly, the maximum necessary air flow requirement through the water-exhaust air heat exchanger 109 becomes 18500/(1,2*4*1000) = 3,8 m³/s in Oslo (as compared to 2,7 m³/s in Stockholm).

Accordingly , the requirement for fresh ventilation air A2 (ventilation demand) for office buildings located in the above-mentioned places studied, as well as the maximum air flow A4 requirement through the water-exhaust air heat exchanger 109 (recirculation demand) in order to achieve a desirably high efficiency for heat recovery in heating operation, can be estimated as in the following table:

| City, heating demand | Ventilation demand | Recirculation demand |
|---|---|---|
| Stockholm, 31 kW | 1,1 m³/s | 2,7 m³/s |
| Oslo, 44 kW | 2,2 m³/s | 3,8 m³/s |
| Stuttgart, <31 kW | 1,3 m³/s | (lower than Stockholm) |
| Marseille, <31 kW | 0,7 m³/s | (lower than Stockholm) |
| Lisbon, <31 kW | 0,6 m³/s | (lower than Stockholm) |
| *Maximum value* | *2,2* | *3,8* |

Accordingly, if it is desired to dimension a system for sufficient ventilation capacity in all the above-mentioned places, the air fans of the system should be capable of providing an air flow of at least 2,2 m³/s of ventilation air A2, A3 through the spaces being ventilated (based on the extreme case of Oslo). In order to obtain a sufficiently high heating capacity in heating operation (and with desirably high efficiency) the air fans of the system should furthermore be capable of providing a total air flow A4 of 3,8 m³/s through the water-exhaust air heat exchanger 109 of the system (based on the extreme case of Oslo).

As is evident from the foregoing calculations and the table above, the recirculation demand is significantly greater than the ventilation demand both in Stockholm and Oslo, and this would probably also be the case in the other places studied. The ratio between recirculation demand and ventilation demand in heating operation can be calculated to be 2,7/1,1 = 2,4 in Stockholm. In Oslo, on the other hand, the corresponding ratio is 3,8/2,2 = 1,7.

Accordingly, a basic system that provides a sufficient capacity for a cold winter's day in Oslo and thus for many other places in Europe and the rest of the world, should be designed and dimensioned such that the fans of the system provide an air flow of at least 2,2 m³/s of ventilation air and a maximum air flow of at least 3,8 m³/s through the water-exhaust air heat exchanger 109. This accordingly means that, in addition to the air flow of actual ventilation air (2,2), an additional air flow (3,8-2,2=1,6 m³/s) is required through the water-exhaust air heat exchanger 109, if a desirably high energy efficiency is to be achievable in heating operation.

### Cooling operation

In an average sized building with office spaces located in a temperate "European climate", for example in any one of the places Stockholm, Oslo, Stuttgart, Marseille or Lisbon, the maximum cooling demand can be estimated to about 59 kW on a warm summer's day. This means that the total recirculation of outdoor air A4 through the system should be capable of removing about 83 kW of heat. In order to obtain as high an efficiency as possible when removing heat from the system via the air flow passage through the water-exhaust air heat exchanger 109, the temperature change of the air passing through the heat exchanger should be as low as possible, preferably no more than 14 °C. This results in a total recirculation air A4 flow requirement of at least 83000 W/(1,2 kg/m³*14 K*1000 J/kgK) = 4,9 m³/s through the water-exhaust air heat exchanger 109.

Accordingly, the ventilation demand for office buildings located in the above-mentioned places, as well as the recirculation demand in order to achieve a desirably high efficiency for removal of heat in cooling operation, can be estimated as in the following table:

| Cooling demand | Ventilation demand | Recirculation demand | Ve./ Re. |
|---|---|---|---|
| 59 kW | | | |
| Stockholm | 1,1 m³/s | 4,9 m³/s | 4,9/1,1=4,4 |
| Oslo | 2,2 m³/s | 4,9 m³/s | 2,2 |
| Stuttgart | 1,3 m³/s | 4,9 m³/s | 3,8 |
| Marseille | 0,7 m³/s | 4,9 m³/s | 7,0 |
| Lisbon | 0,6 m³/s | 4,9 m³/s | 8,2 |
| *Maximum value* | *2,2* | *4,9* | |

Accordingly, if it is desired to dimension a system for sufficient ventilation capacity in all the above-mentioned places, the air fans of the system should be capable of providing an air flow of at least 2,2 m³/s of ventilation air A2, A3 through the spaces being ventilated (based on the extreme case of Oslo). In order to obtain a sufficiently high cooling capacity in cooling operation (and this with desirably high efficiency) the air fans of the system should furthermore be capable of providing a total air flow A4 of 4,9 m³/s through the water-exhaust air heat exchanger 109 of the system. As is evident from the table above, the ratio between recirculation demand and ventilation demand in cooling operation is 4,9/2,2 = 2,2 in Oslo.

From the foregoing calculations and tables for heating and cooling operation, respectively, it can be concluded that a system which is designed and dimensioned to meet both the high ventilation demand in Oslo and the recirculation demand required for energy efficient cooling on a warm summer's day in all the places studied could be successfully used in similar buildings in any other place with a climate and local conditions falling within the ranges of the places studied.

It is of course a great advantage to be able to design and dimension a system for controlling the indoor climate in a building, for example an office building, such that one and the same basic system can be used over as large a geographical area as possible with maintained high energy efficiency.

As regards Oslo, due to local regulations for ventilation, this place must be seen as an extreme case when the requirements for supply of fresh ventilation air are concerned. A system which is dimensioned to meet the ventilation requirements imposed in Oslo will therefore also meet the ventilation requirements in most other places in Europe and the rest of the world.

Even if the climate zones where Oslo and the other places studied are situated are relatively cool from a global perspective, the maximum recirculation demand in cooling operation will place the greatest capacity demands on the system, at least if the system is to be operable in a desirable energy-efficient manner.

If one were to dimension all the ventilation fans, air ducts and other components of the system using known technology and based on the maximum recirculation demand expected to arise in the geographical area in which one wants to be able to use the system, this would result in a system with air ducts, ventilation fans and/or heat exchangers much larger than what is actually required to meet the capacity demand during those parts of the year, or for those places in the geographical area, where the recirculation demand is not at a maximum.

In a system according to prior art, the above-mentioned additional air flow of recirculation air (1.6 m³/s) required in heating operation would have been achieved by making the ventilation fans and air ducts larger in the entire system. The system according to the present invention makes it possible to avoid such an unnecessary over-dimensioning, as will be explained more closely in the following.

After thorough analysis, trials and test runs, as well as a considerable amount of thinking, the present inventors have found out how such an unnecessary over-dimensioning of the system can be avoided.

In order to avoid the over-dimensioning, the system 101 according to the invention firstly provides a possibility of introducing a partial flow A1' of outdoor air upstream of the water-exhaust air heat exchanger 109, and secondly, at least one second fan device 112 for sucking or blowing said partial flow A1', together with exiting ventilation air A6, through the water-exhaust air heat exchanger 109. Thirdly, the ratio between the maximum air flow rate that the second fan device 112 can provide through the water-exhaust air heat exchanger 109 and the air flow rate provided by the ventilation fans 111, 111' of the system has been selected to be at least 1,7, which, as has become evident above, makes it possible to use the system 101 according to the invention in heating operation with high energy efficiency in most places with a temperate, "European" climate.

As has become evident above, a system which meets the ventilation demand for prescribed ventilation and the recirculation demand for 59 kW cooling operation in an average sized office building in Oslo could also be successfully used in similar buildings in the major part of Europe and in many other places in the world.

As has become evident above, the ventilation air demand was 2,2 m³/s in Oslo, whereas the recirculation air demand for energy efficient heat transfer in the water-exhaust air heat exchanger 109 was 4,9 m³/s in 59 kW cooling operation. This means that the fan or fans 111, 111' circulating the ventilation air in fact only have to provide a flow of 2,2 m³/s of ventilation air A2, A3. However, in order to enable the system 101 to remove a sufficient amount of heat from the interior of the building in a desirably energy efficient manner in cooling operation, an air flow of as much as 4,9 m³/s is required through the water-exhaust air heat exchanger 109. Accordingly, this means that the system has to be capable of blowing or sucking an additional 4,9-2,2=2,7 m³/s of air through the water-exhaust air heat exchanger 109, i.e. 2,7 m³/s more than the actual ventilation demand (2,2 m³/s), in order to ensure a sufficient cooling capacity with desirably high efficiency.

An energy efficient basic system which, in addition to a sufficient heating capacity, also provides a sufficient cooling capacity for a warm summer's day in climates similar to Europe's, including Oslo, should thus be designed and dimensioned such that the fans of the system provide an air flow of at least 2,2 m³/s of ventilation air and a maximum air flow rate of at least 4,9 m³/s through the water-exhaust air heat exchanger 109.

In a system according to prior art, the above-mentioned additional air flow of recirculation air (2,7 m³/s) required in cooling operation would have been achieved by making the ventilation fans and air ducts larger in the entire system.

Therefore, in order to avoid such an unnecessary over-dimensioning of the system for cooling operation, the ratio between the maximum air flow rate that the second fan device 112 can provide through the water-exhaust air heat exchanger 109 and the air flow rate provided by the ventilation fans 111, 111' of the system has, in a particularly advantageous embodiment of the invention, been selected to be at least 2,2, which, as has become evident above, makes it possible to use the system 101 according to the particularly advantageous embodiment in cooling operation in most places with a temperate, "European" climate.

If it is desired that the system should have a sufficient capacity and operate as energy efficiently as possible also in geographical areas with very warm summers and an even greater recirculation demand, it is conceivable with embodiments where the above-mentioned ratio is selected to be even greater than 2,2, in order to ensure a sufficient removal of heat from the system in cooling operation. Moreover, the same is the case if the system is to be used in extremely cold climates, e.g. in an Arctic climate, where the recirculation demand can also become very high, in that case, however, in order to give the system sufficient heat recovery and heating capacity.

In the foregoing, a number of embodiments of the invention have been described with reference to the figures in the accompanying drawings. It should be understood that the described embodiments and the details in the figures should only be regarded as examples, and that many other embodiments of the invention are possible within the scope of the following claims.

It should be pointed out that, although the system according to the invention is designed and dimensioned so as to enable one and the same type of basic system to be installed and used in an energy efficient manner in buildings located in different places with different climates and different local conditions, the system will of course have to be provided in different size variants or different capacity classes to enable the overall ventilation, heating and cooling capacity of the system to be adapted to buildings of different size and/or type.

## Claims

1. A system for controlling the indoor climate in a building, wherein the system (101) at least comprises
- a first air duct (102) which is adapted for introducing outdoor air (A1) into the system and for discharging outdoor air (A2) treated in the system as supply air into the interior of the building,
- a second air duct (103) which is adapted for introducing exhaust air (A3) from the interior of the building into the system and for discharging exhaust air (A4) treated in the system into the outdoor air outside the interior of the building,
- an exhaust-supply air heat exchanger (104) which is arranged in connection with said first (102) and second (103) air ducts for selective transfer of heat from said exhaust air (A3) being treated in the system to said outdoor air (A1) being treated in the system or from said outdoor air (A1) being treated in the system to said exhaust air (A3) being treated in the system,
- a water system (105) having a hot water circuit (106) and a cold water circuit (107),
- a water-supply air heat exchanger (108) which is arranged in connection with said first air duct (102) for selective connection to said hot water circuit (106) or said cold water circuit (107) for transfer of heat from said hot water circuit (106) to said outdoor air (A1) being treated in the system or from said outdoor air (A1) being treated in the system to said cold water circuit (107),
- a water-exhaust air heat exchanger (109) which is arranged in connection with said second air duct (103) for selective connection to said hot water circuit (106) or said cold water circuit (107) for transfer of heat from said hot water circuit (106) to said exhaust air (A3) being treated in the system or from said exhaust air (A3) being treated in the system to said cold water circuit (107),
- a heat pump (110) which is arranged in connection with said water system (105) for selective transfer of heat between said water circuits (106, 107), a control unit (114) which is adapted for controlling the flows of air (A1, A1', A5, A2, A3, A6, A4) and the flows of fluid (W1, W2, W3, W4, W5, W6) in the system, whereby at least one first fan device (111, 111') is arranged in connection with said first (102) and/or second (103) air duct for circulating ventilation air (A2, A3) to and/or from the interior of the building,
**that** the system has a passage (113) for admitting a partial flow (A1') of outdoor air (A1) upstream of said water-exhaust air heat exchanger (109) but downstream of said exhaust-supply air heat exchanger (104),
**that** at least one second fan device (112) is arranged in connection with said second air duct (103) for sucking or blowing said partial flow (A1') of outdoor air (A1), together with exiting circulated ventilation air (A6), through said water-exhaust air heat exchanger (109), wherein said at least one second fan device (112) is dimensioned to be capable of providing a maximum air flow rate which is at least 1,7 times greater than the air flow rate provided by said at least one first fan device (111, 111') when the system is in heating operation.

2. The system according to claim 1,
**characterized in that** said at least one second fan device (112) is dimensioned to be capable of providing a maximum air flow rate which is at least 2.2 times greater than the air flow rate provided by said at least one first fan device (111, 111') when the system is in cooling operation.

3. The system according to claim 1 or 2,
**characterized in that** the second fan device (112) is provided with a speed control for regulating the admission of the partial flow (A1') of outdoor air (A1) into the second air duct (103).

4. The system according to any one of the preceding claims,
**characterized in that** the system comprises a variable shutter which is disposed in the passage (113) for regulating the admission of the partial flow (A1') of outdoor air (A1) into the second air duct (103).

5. The system according to any one of the preceding claims,
**characterized in that** the exhaust-supply air heat exchanger is designed as a rotary heat exchanger (104) with a variable speed.

6. The system according to any one of the preceding claims,
**characterized in that** said water-supply air heat exchanger (108) and/or said water-exhaust air heat exchanger (109) is/are designed as a combined heating and cooling battery for transfer of heat to/from said air (A1, A3) from/to said water circuits (106, 107).

7. The system according to any one of the preceding claims,
**characterized in that** said heat pump (110) is adapted for direct or indirect transfer of heat between said water circuits (106, 107).

8. The system according to any one of the preceding claims,
**characterized in that** said control unit (114) is adapted for controlling the flows of air (A1, A1', A5, A2, A3, A6, A4) in the system by means of said fans (111, 111', 112) and/or said variable shutter and for controlling the flows of fluid (W1, W2, W3, W4, W5, W6) in the system by means of a flow control unit (M4).

## Patentansprüche

1. System zur Steuerung des Innenklimas in einem Gebäude, wobei das System (101) zumindest umfasst:
eine erste Luftleitung (102), die angepasst ist, um Außenluft (A1) in das System einzuführen und, um Außenluft (A2), die in dem System als Zuluft behandelt wird, in das Innere des Gebäudes abzuführen,
eine zweite Luftleitung (103), die angepasst ist, um Abluft (A3) von dem Inneren des Gebäudes in das System einzuführen und, um Abluft (A4), die in dem System behandelt wird, in die Außenluft außerhalb des Inneren des Gebäudes abzuführen,
einen Abluft-Zuluft-Wännetauscher (104), der in Verbindung mit der ersten Luftleitung (102) und der zweiten Luftleitung (103) angeordnet ist, zur selektiven Übertragung von Wärme von der Abluft (A3), die in dem System behandelt wird, zu der Außenluft (A1), die in dem System behandelt wird, oder von der Außenluft (A1), die in dem System behandelt wird, zu der Abluft (A3), die in dem System behandelt wird,
ein Wassersystem (105) mit einem Heißwasserkreislauf (106) und einem Kaltwasserkreislauf (107),
einen Wasser-Zuluft-Wärmetauscher (108), der in Verbindung mit der ersten Luftleitung (102) zur selektiven Verbindung mit dem Heißwasserkreislauf (106) oder dem Kaltwasserkreislauf (107) angeordnet ist, zur Übertragung von Wärme von dem Heißwasserkreislauf (106) zu der Außenluft (A1), die in dem System behandelt wird, oder von der Außenluft (A1), die in dem System behandelt wird, zu dem Kaltwasserkreislauf (107),
einen Wasser-Abluft-Wärmetauscher (109), der in Verbindung mit der zweiten Luftleitung (103) zur selektiven Verbindung mit dem Heißwasserkreislauf (106) oder dem Kaltwasserkreislauf (107) angeordnet ist zur Übertragung von Wärme von dem Heißwasserkreislauf (106) zu der Abluft (A3), die in dem System behandelt wird, oder von der Abluft (A3), die in dem System behandelt wird, zu dem Kaltwasserkreislauf (107),
eine Wärmepumpe (110), die in Verbindung mit dem Wassersystem (105) angeordnet ist, zur selektiven Übertragung von Wärme zwischen den Wasserkreisläufen (106, 107),
eine Steuereinheit (114), die angepasst ist, um die Flüsse von Luft (A1, A1', A5, A2, A3, A6, A4) und die Flüsse von Fluid (W1, W2, W3, W4, W5, W6) in dem System zu steuern, wobei
wenigstens eine erste Lüftervorrichtung (111, 111') in Verbindung mit der ersten Luftleitung (102) und/oder der zweiten Luftleitung (103) angeordnet ist, um Ventilationsluft (A2, A3) zu dem und/oder aus dem Inneren des Gebäudes zu zirkulieren, wobei
das System einen Durchgang (113) aufweist, zum Zulassen eines Teilflusses (A1') der Außenluft (A1) in Flussrichtung vor dem Wasser-Abluft-Wärmetauschers (109) aber in Flussrichtung nach dem Abluft-Zuluft-Wärmetauschers (104), wobei
wenigstens eine zweite Lüftervorrichtung (112) in Verbindung mit der zweiten Luftleitung (103) angeordnet ist, zum Ansaugen oder Ausblasen des Teilflusses (A1') von Außenluft (A1) zusammen mit dem austretender zirkulierter Ventilationsluft (A6) durch den Wasser-Abluft-Wärmetauscher (109), wobei die wenigstens eine zweite Lüftervorrichtung (112) derart dimensioniert ist, um in der Lage zu sein eine maximale Luftflussrate bereitzustellen, die mindestens 1,7 mal größer ist als die Luftflussrate, die durch die wenigstens eine erste Lüftervorrichtung (111, 111') bereitgestellt wird, wenn das System im Erwärmungsbetrieb ist.

2. System gemäß Anspruch 1, **dadurch gekennzeichnet, dass** die wenigstens eine zweite Lüftervorrichtung (112) derart dimensioniert ist, um in der Lage zu sein eine maximale Luftflussrate bereitzustellen, die mindestens 2,2 mal größer ist als die Luftflussrate, die durch die wenigstens eine erste Lüftervorrichtung (111, 111') bereitgestellt wird, wenn das System im Kühlungsbetrieb ist.

3. System gemäß Anspruch 1 oder 2, **dadurch gekennzeichnet, dass** die zweite Lüftervorrichtung (112) mit einer Geschwindigkeitssteuerung ausgestattet ist, zur Regelung der Ausgabe des Teilflusses (A1') der Außenluft (A1) in die zweite Luftleitung (103).

4. System gemäß einem der vorstehenden Ansprüche, **dadurch gekennzeichnet, dass** das System einen variablen Verschluss umfasst, die in dem Durchgang (113) angeordnet ist, zur Regelung der Ausgabe des Teilflusses (A1') der Außenluft (A1) in die zweite Luftleitung (103).

5. System gemäß einem der vorstehenden Ansprüche, **dadurch gekennzeichnet, dass** der Abluft-Zuluft-Wärmetauscher als ein Rotationswärmetauscher (104) mit einer variablen Geschwindigkeit ausgelegt ist.

6. System gemäß einem der vorstehenden Ansprüche, **dadurch gekennzeichnet, dass** der Wasser-Zuluft-Wärmetauscher (108) und/oder Wasser-Abluft-Wärmetauscher (109) ausgelegt ist/sind als eine kombinierte Erwärmungs- und Kühl-Batterie, zum Übertragen von Wärme zu/von der Luft (A1, A3) von/zu dem Wasserkreislauf (106, 107).

7. System gemäß einem der vorstehenden Ansprüche, **dadurch gekennzeichnet, dass** die Wärmepumpe (110) angepasst ist zum direkten oder indirekten Übertragen von Wärme zwischen den Wasserkreisläufen (106, 107).

8. System gemäß einem der vorstehenden Ansprüche, **dadurch gekennzeichnet, dass** die Steuerungseinheit (114) angepasst ist, um die Flüsse von Luft (A1, A1', A5, A2, A3, A6, A4) in dem System durch Nutzung der Lüfter (111, 111', 112) und/oder des variablen Verschlusses zu steuern und die Flüsse von Fluid (W1, W2, W3, W4, W5, W6) in dem System durch Nutzung einer Flusssteuerungseinheit (M4) zu steuern.

## Revendications

1. Un système pour commander la température à l'intérieur d'un bâtiment, dans lequel le système (101) comprend au moins :
- un premier conduit d'air (102) qui est adapté pour introduire de l'air extérieur (A1) dans le système, et pour délivrer de l'air extérieur (A2) traité dans le système d'alimentation en tant qu'air fourni à l'intérieur du bâtiment,
- un deuxième conduit d'air (103) qui est adapté pour introduire dans le système de l'air à évacuer (A3) provenant de l'intérieur du bâtiment et pour délivrer de l'air à évacuer (A4) traité dans le système vers l'air extérieur en dehors de l'intérieur du bâtiment,
- un échangeur de chaleur (104) air à évacuer - air fourni, qui est agencé en liaison avec lesdits premier (102) et deuxième (103) conduits d'air pour le transfert sélectif de la chaleur présente dans l'air à évacuer (A3) traité dans le système vers l'air extérieur (A1) traité dans le système, ou présente dans ledit air extérieur (A1) traité dans le système vers ledit air à évacuer (A3) traité dans le système,
- un système à eau (105) ayant un circuit d'eau chaude (106) et un circuit d'eau froide (107),
- un échangeur de chaleur (108) eau - air extérieur qui est agencé en liaison avec ledit premier conduit d'air (102) pour une connexion sélective audit circuit d'eau chaude (106) ou audit circuit d'eau froide (107), pour un transfert de chaleur depuis ledit circuit d'eau chaude (106) vers ledit air extérieur (A1) traité dans le système, ou depuis ledit air extérieur (A1) traité dans le système vers ledit circuit d'eau froide (107),
- un échangeur de chaleur (109) eau - air à évacuer, qui est agencé en liaison avec ledit deuxième conduit d'air (103) pour la connexion sélective audit circuit d'eau chaude (106) ou audit circuit d'eau froide (107) pour un transfert de chaleur depuis ledit circuit d'eau chaude (106) vers ledit air à évacuer (A3) traité dans le système, ou depuis ledit air à évacuer (A3) traité dans le système vers ledit circuit d'eau froide (107),
- une pompe à chaleur (110) qui est agencée en liaison avec ledit système à eau (105) pour un transfert sélectif de chaleur entre lesdits circuits d'eau (106, 107),
une unité de commande (114) qui est adaptée pour commander les écoulements d'air (A1, A1', A5, A2, A3, A6, A4) et les écoulements de fluide (W1, W2, W3, W4, W5, W6) dans le système,
au moins un premier dispositif de soufflerie (111, 111') est agencé en liaison avec ledit premier (102) et / ou deuxième (103) conduits d'air pour faire circuler l'air de ventilation (A2, A3) vers et / ou depuis l'intérieur du bâtiment,
le système comporte un passage (113) pour l'admission d'un flux partiel (A1') d'air extérieur (A1) en amont de l'échangeur de chaleur (109) eau - air à évacuer, mais en aval dudit échangeur de chaleur (104) air à évacuer - air fourni,
au moins un deuxième dispositif de soufflerie (112) est agencé en liaison avec ledit deuxième conduit d'air (103) pour aspirer ou souffler ledit flux partiel (A1') d'air extérieur (A1), en même temps que de l'air de ventilation (A6) circulant en cours de sortie, à travers ledit échangeur de chaleur (109) eau - air à évacuer, ledit au moins un deuxième dispositif de soufflerie (112) étant dimensionné pour être apte à fournir un débit d'air maximal qui est au moins 1,7 fois plus grand que le débit d'air fourni par ledit au moins un premier dispositif de soufflerie (111, 111') lorsque le système est en mode chauffage.

2. Le système selon la revendication 1,
**caractérisé en ce que** ledit au moins un deuxième dispositif de soufflerie (112) est dimensionné de façon à être apte à fournir un débit d'air maximal qui est au moins 2,2 fois plus grand que le débit d'air fourni par ledit au moins un premier dispositif de soufflerie (111, 111 ') lorsque le système est en mode refroidissement.

3. Le système selon la revendication 1 ou la revendication 2,
**caractérisé en ce que** le deuxième dispositif de soufflerie (112) est muni d'une commande de vitesse pour la régulation de l'admission du flux partiel (A1') d'air extérieur (A1) dans le deuxième conduit d'air (103).

4. Le système selon l'une quelconque des revendications précédentes,
**caractérisé en ce que** le système comporte un obturateur variable qui est disposé dans le passage (113) de régulation de l'admission du flux partiel (A1') d'air extérieur (A1) dans le deuxième conduit d'air (103).

5. Le système selon l'une quelconque des revendications précédentes,
**caractérisé en ce que** l'échangeur de chaleur air à évacuer - air à fournir est conçu sous la forme d'un échangeur de chaleur rotatif (104) ayant une vitesse variable.

6. Le système selon l'une quelconque des revendications précédentes,
**caractérisé en ce que** ledit échangeur de chaleur (108) eau - d'air à fournir et / ou ledit échangeur de chaleur (109) eau - air à évacuer est / sont conçus sous la forme d'un ensemble combiné de chauffage et de refroidissement pour le transfert de chaleur vers / depuis ledit circuit d'air (A1, A3) vers / depuis lesdits circuits d'eau (106, 107).

7. Le système selon l'une quelconque des revendications précédentes,
**caractérisé en ce que** ladite pompe à chaleur (110) est adaptée pour le transfert direct ou indirect de chaleur avec lesdits circuits d'eau (106, 107).

8. Le système selon l'une quelconque des revendications précédentes,
**caractérisé en ce que** ladite unité de commande (114) est adapté pour commander les écoulements d'air (A1, A1', A5, A2, A3, A6, A4) dans le système au moyen desdites souffleries (111, 111', 112) et/ou dudit obturateur variable, et pour commander les écoulements de fluide (W1, W2, W3, W4, W5, W6) dans le système au moyen d'une unité de commande d'écoulement (M4).
